# EUROPEAN PATENT SPECIFICATION

(11) **EP 4 261 441 B1**
(45) Date of publication and mention of the grant of the patent: **30.09.2026**
(21) Application number: 22168155.4
(22) Date of filing: 13.04.2022
(51) Int. Cl.: F16K 11/07, F16K 29/00, B25D 9/20, B25D 9/22

(54) **CONTROL VALVE AND IMPACT DEVICE**
STEUERVENTIL UND SCHLAGVORRICHTUNG
SOUPAPE DE COMMANDE ET DISPOSITIF D'IMPACT

(43) Date of publication of application: 18.10.2023
(73) Proprietor: Sandvik Mining and Construction Oy, 33330 Tampere (FI)
(72) Inventor: KOSKIMÄKI, Antti, 33311 Tampere (FI); KELA, Timo, 33311 Tampere (FI); HÄMÄLÄINEN, Mikko, 33311 Tampere (FI); KANDELIN, Lars, 33311 Tampere (FI)
(74) Representative: Sandvik

(56) References cited:
- EP-A1- 3 919 717
- EP-B1- 2 718 064
- EP-B1- 2 906 323
- DE-A1- 102005 030 173
- US-A- 3 051 191
- US-A- 3 807 454
- US-A1- 2007 151 614
- US-A1- 2018 163 888

## Description

### Background of the invention

The invention relates to a control valve of a hydraulic impact device of a rock breaking apparatus.

The invention further relates to an impact device and to a method of generating impacts in a hydraulic impact device of a rock breaking apparatus.

The field of the invention is defined more specifically in the preambles of the independent claims.

In rock drilling machines and other rock breaking apparatuses different type of hydraulic impact devices are used. The impact devices are provided with reciprocating percussion pistons working cycle of which is controlled by means of control valves. For instance, EP 2 718 064 B1 discloses a control valve according to the preamble of the appended claim 1. However, the known solutions have shown some disadvantages regarding durability of the control valves.

### Brief description of the invention

An object of the invention is to provide a novel and improved control valve and impact device for generating impacts in a hydraulic impact device of a rock breaking apparatus.

The control valve according to the invention is characterized by the characterizing features of the appended independent claim 1.

According to the invention, there is provided a control valve of a hydraulic impact device of a rock breaking apparatus is an elongated piece with a central axis and radial outer and inner surfaces, and it also comprises several control surfaces at axial distances from each other for controlling hydraulic fluid flows in response to axial control movement. Further, the control valve is configured to be rotated hydraulically during the operation of the impact device. Further, at least one radial surface of the valve comprises at least one slanted surface for generating torque for providing the hydraulic rotation, longitudinal direction of which has oblique orientation in relation to the central axis of the valve. In other words, the control valve comprises one or more slanted surfaces at one or more surface areas being subjected to fluid flow during the operating cycle of the impact device. Thus, the fluid flow causes on the slanted surfaces torque around the central axis of the control valve and makes the control valve to rotate, or at least turn, in relation to its central axis. The control valve is a control sleeve comprising a central axial opening configured to serve as a fluid passage. In other words, the control sleeve can surround a percussion piston which can be arranged to the central axial opening.

An advantage of the disclosed solution is that the control valve changes automatically and without any external actuator or force its position in relation the central axis. Thereby it is possible to increase durability of the control valve. The control valve may be subjected to cavitation whereby cavitation damages of the control valve can be decreased. A further advantage is that manufacture of the slanted surfaces is easy and inexpensive. The use of the disclosed solution requires only slight modifications to the basic structure of the impact device.

According to the invention, the control valve is without any transverse openings passing the control valve in transverse direction. In other words, the control valve is a solid element with closed surfaces in transverse direction.

According to an embodiment that is not part of the present invention , the slanted surface has axial dimension and extends on the surface of the control valve for a limited distance in axial direction.

According to an embodiment that is not part of the present invention , the slanted surface has at least 10° pitch relative to the central axis of the control valve. The pitch may be 8 - 15°, for example.

According to an embodiment that is not part of the present invention , the slanted surfaces have limited dimensions in axial direction of the control valve, i.e., the slanted surfaces do not extend end to end of the control valve.

According to an embodiment that is not part of the present invention , the slanted surfaces extend end to end of the control valve.

According to an embodiment that is not part of the present invention , the slanted surfaces of the control valve are formed by chip removing machining, such as milling.

According to an embodiment that is not part of the present invention , the control valve is manufactured by means of additive manufacturing (AM).

According to an embodiment that is not part of the present invention , the rock breaking apparatus is a rock drilling machine.

According to an embodiment that is not part of the present invention , the rock breaking apparatus is alternatively a breaking hammer.

According to an embodiment, the radial outer surface is provided with several slanted surfaces. In other words, the generated rotational torque can be intensified by increasing number of the slanted surfaces.

According to an embodiment that is not part of the present invention, number of the slanted surfaces at one cross-section may be 2 - 20.

According to an embodiment, the radial inner surface is provided with several slanted surfaces.

According to an embodiment, the slanted surface is linearly directed configuration on the radial surface of the control valve. In other words, shape of the slanted surface is straight and deviates thereby from curved or helical surfaces. An advantage of this solution is that the linearly directed slanted surface may be easier to manufacture.

According to an embodiment, the slanted surface has helical configuration in longitudinal direction of the slanted surface.

According to an embodiment, the slanted surface has uniform radial dimensions at least in one longitudinal part of the slanted surface.

According to an embodiment, the slanted surface has continuously changing radial dimensions at least in one longitudinal part of the slanted surface.

According to an embodiment, the control valve has a first end surface and an opposite second end surface. Further, several slanted surfaces extend to at one of the mentioned first end surface and second end surface.

According to an embodiment, the control valve has at least one control shoulder on at least one of the mentioned inner radial surface and outer radial surface. The mentioned at least one control shoulder is provided with several slanted surfaces.

According to an embodiment, the slanted surface has groove-like configuration. In other words, the groove comprises an oblique surface portion or wall facing towards hydraulic fluid flow passing the surface of the control valve during the operation whereby the torque is generated on that surface.

According to an embodiment that is not part of the present invention , the groove has constant cross section from end to end.

According to an embodiment that is not part of the present invention , cross sectional shape of the groove changes when examined in longitudinal direction of the groove.

According to an embodiment that is not part of the present invention , bottom of the groove is inclined. Inclination angle of the bottom may be 10 - 20°, for example about 15°.

According to an embodiment, the slanted surface has protrusion-like configuration. In other words, the control valve may comprise one or more longitudinal slanted protrusions, such as ridges, bulges, elevations, or spirals. Then there is an oblique surface portion or wall facing towards hydraulic fluid flow passing the surface of control valve during the operation whereby the torque is generated on that surface.

According to an embodiment, the control valve has a first set of several first slanted surfaces and a second set of several second slanted surfaces at an axial distance from the first set. The first and second slanted surfaces have oppositely directed oblique orientations relative to each other. In other words, the control valve can control fluid flows having opposite flow directions relative to each other. Then the first set is influenced by first fluid flow having first direction of flow, and the second set is influenced by second fluid flow having second direction. The first and second sets are configured to turn the control valve to the same rotation direction when being influenced by the first and second fluid flows.

According to an embodiment, the disclosed solution relates to an impact device of a rock breaking apparatus comprising: a body; a percussion piston being movable in an impact direction towards a front end of the impact device and in a reverse direction towards a rear end of the impact device; a working pressure space provided with hydraulic pressure fluid for moving the percussion piston in the reverse direction; a control pressure space at a rear end of the valve cylinder and being provided with a control valve for controlling hydraulic pressure affecting at the control pressure space and to thereby controlling reciprocating movement of the percussion piston; and wherein the control valve is configured to be rotated hydraulically during the operation of the impact device. Further, the control valve comprises at least one slanted surface on at least one radial surface of the control valve for generating torque for providing the hydraulic rotation. The control valve is in accordance with the embodiments and features disclosed in this document.

The above disclosed embodiments may be combined in order to form suitable solutions having those of the above features that are needed.

### Brief description of the figures

Some embodiments are described in more detail in the accompanying drawings, in which
Figure 1 is a schematic side view of a rock drilling unit provided with a hydraulic rock drilling machine,
Figure 2 is a schematic side view of an excavator provided with a hydraulic breaking hammer,
Figure 3 is a schematic and cross-sectional side view of a rock drilling machine comprising a hydraulic impact device,
Figure 4 is a schematic side view of an impact device controlled by means of a spool valve,
Figures 5 - 17 are schematic views of some sleeve-like control valves provided with slanted surfaces causing desired rotation during their operation cycles, and
Figures 18 - 21 are schematic views of some shaft-like control valves for spool valves and being provided with slanted surfaces causing desired rotation during their operation cycles.

For the sake of clarity, the figures show some embodiments of the disclosed solution in a simplified manner. In the figures, like reference numerals identify like elements.

### Detailed description of some embodiments

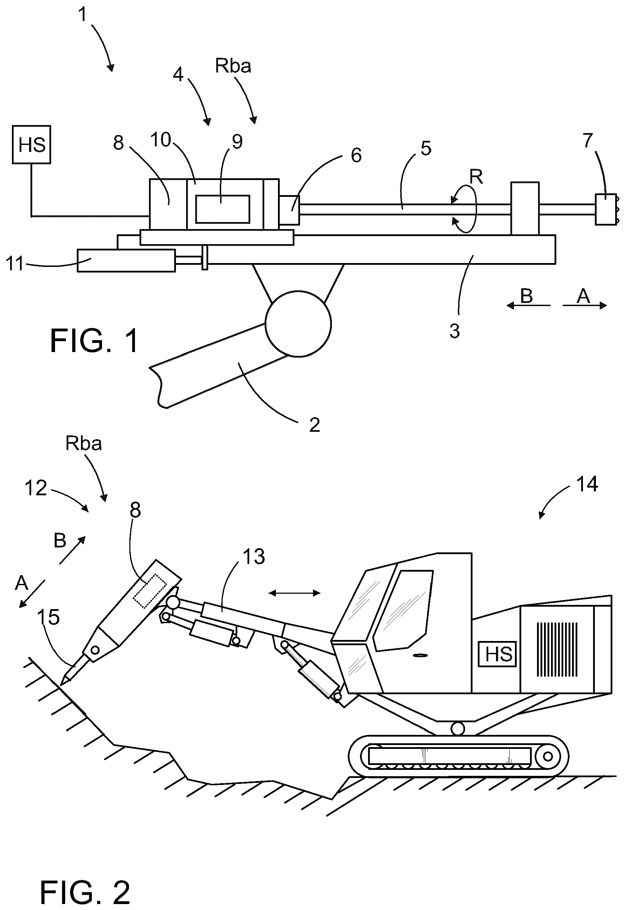

Figure 1 shows a rock drilling unit 1 intended for drilling holes to a rock surface. The rock drilling unit 1 is typically mounted to a drilling boom 2 of a rock drilling rig. The drilling unit 1 is provided with a feed beam 3 and a rock drilling machine 4 supported on it. A drilling tool 5 is connectable to the drilling machine 4. The rock drilling machine 4 may comprise a shank adaptor 6 at a front end of the rock drilling machine 4 for connecting the tool 5. At an opposite end of the tool 5 is a drill bit 7. The rock drilling machine 4 comprises an impact device 8 for providing the drilling tool 5 with impact pulses for breaking the rock, and a rotating device 9 for rotating R the drilling tool 5 around its longitudinal axis. The rock drilling machine 4 further comprises a basic body 10 for mounting the impact device 8, the rotating device 9, and possible other devices and elements needed. The rock drilling machine 4 may be moved on the feed beam 3 by means of a feed device 11 in a drilling or feed direction A and in a return direction B. The rock drilling machine 4 is hydraulically operable whereby the impact device 8 and the rotating device 9 are connected to a hydraulic system HS. Further, the impact device 8 may be in accordance with the solution disclosed in this document and may thereby comprise the disclosed rotating control valve.

Figure 2 discloses a hydraulic breaking hammer 12 mounted to a boom 13 of an excavator 14 and connected to a hydraulic system HS of the excavator 14. The breaking hammer 12 comprises a hydraulic impact device 8 for generating impact pulses to a breaking tool 15 connectable to the breaking hammer 12. The breaking tool 15 can move in an impact direction A and a return direction B during the rock breaking. The impact device 8 may be in accordance with the solution disclosed in this document and may thereby comprise the disclosed rotating control valve.

In Figures 1 and 2 rock breaking apparatuses, such as the rock drilling machine 4 and the hydraulic breaking hammer 12, are indicated with a reference Rba.

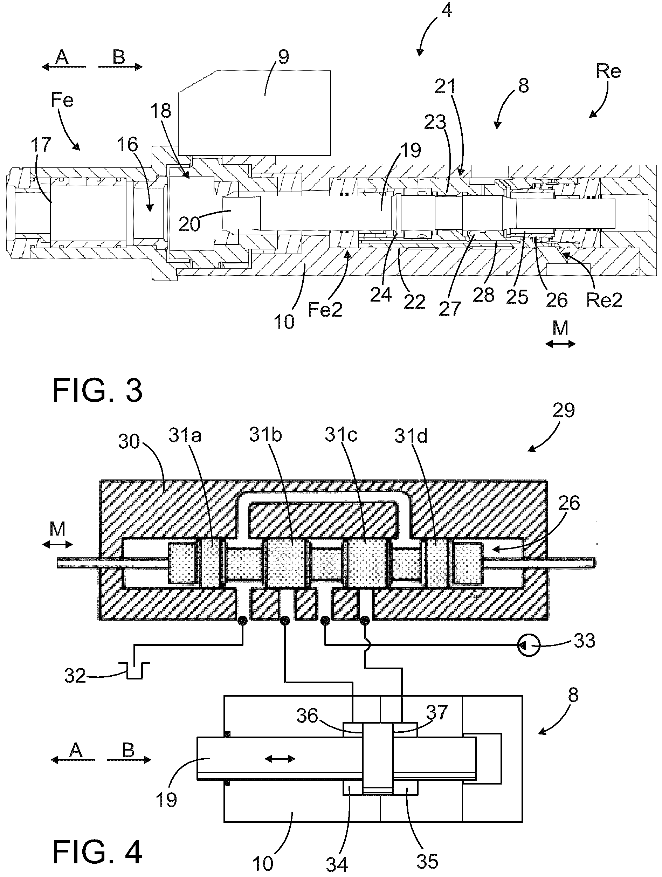

Figure 3 discloses a rock drilling machine 4 comprising a body 10, an impact device 8, a rotating device 9, a flushing housing 16, an open space 17 for receiving a shank adaptor, and a gear housing 18. The flushing housing 16 and gear housing 18 are located at a front end Fe of the body 10, whereas the impact device 8 is located at a rear end Re. The shank adapter can be mounted to the open space 17 and its rear end can be connected to rotating elements at the gear housing 18 so that the shank adapter and a drilling tool connectable to the shank adapter can be rotated by means of the rotating device 9. Flushing fluid can be fed via the flushing housing 16 to an axial flushing channel of the shank adapter and further to the drilling tool.

The impact device 8 comprises a percussion piston 19 which is arranged to move in a reciprocating manner in the impact direction A and return direction B. At a front end of the percussion piston 19 is an impact surface 20 which is configured to strike the shank adapter. The impact device 8 may comprise a percussion cartridge 21 which is arranged axially inside a rear portion Re2 of a central space 22 of the body 10. The percussion cartridge 21 may comprise a valve cylinder 23 through which the percussion piston 19 passes. The impact device 8 comprises a working pressure space 24 provided with hydraulic pressure fluid for moving the percussion piston 19 in the reverse direction B. There is a control pressure space 25 at a rear end Re2 of the valve cylinder 23. The control pressure space 25 is provided with a sleeve-like control valve 26 for controlling hydraulic pressure affecting at the control pressure space 25 and to thereby control reciprocating movement of the percussion piston 19. The pressure in the control valve space 25 moves the percussion piston 19 in the impact direction because working pressure areas of the percussion piston in the impact direction A are greater therein compared to working pressure areas or the percussion piston at the working pressure space 24 and affecting in the return direction B. In the working pressure space 24 there may prevail continuous high pressure during the operation, whereas in the control pressure space 25 magnitude of the pressure can be changed by means of the control valve 26 for making the percussion piston 19 to execute the reciprocating movement. Further, the valve cylinder 23 is provided with a pilot pressure space 27 for providing pressure pulses in response to movement of the percussion piston 19 in the impact direction A. The valve cylinder 23 is further provided with several axial fluid channels 28 for connecting the pilot pressure space 27 and the control pressure space 25. The pressure pulses generated in the pilot pressure space 27 effect on control surfaces of the control valve 26 and make it to change its control position.

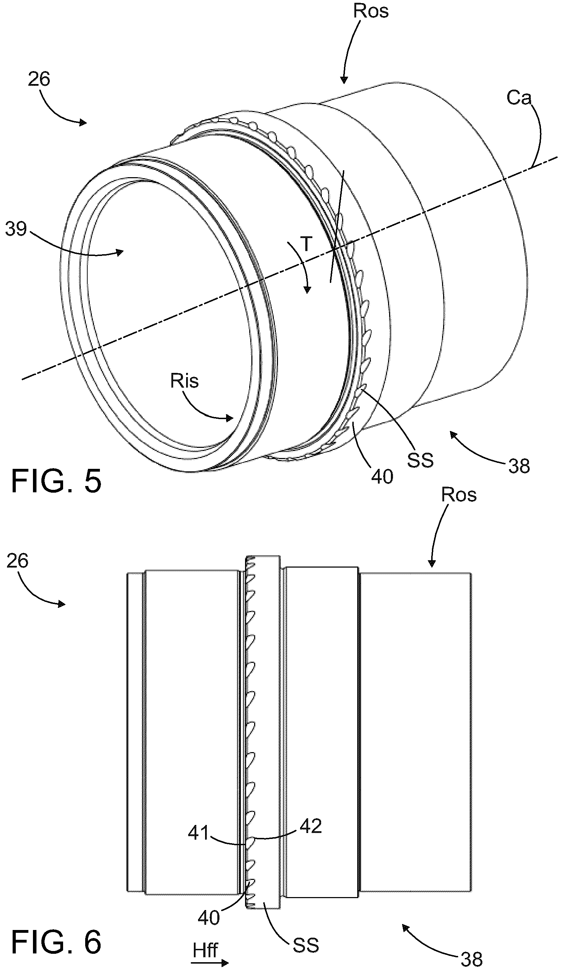

The control valve 26 is an elongated piece with a central axis and radial outer and inner surfaces, and it comprises several control surfaces at axial distances from each other for controlling hydraulic fluid flows in response to axial control movement. Furthermore, one or more radial surfaces i.e., inner or outer surfaces, of the control valve 26 comprise one or several slanted surfaces longitudinal direction of which have oblique orientation in relation to the central axis of the control valve. Possible configurations of the slanted surfaces are disclosed in Figures 5 -17.

The impact device 8 disclosed in Figure 3 may be utilized also in a rock breaking hammer. Then there is no rotating device, gearing housing, flushing housing and the shank adapter. The percussion piston may be arranged to strike to an impact surface of a breaking tool.

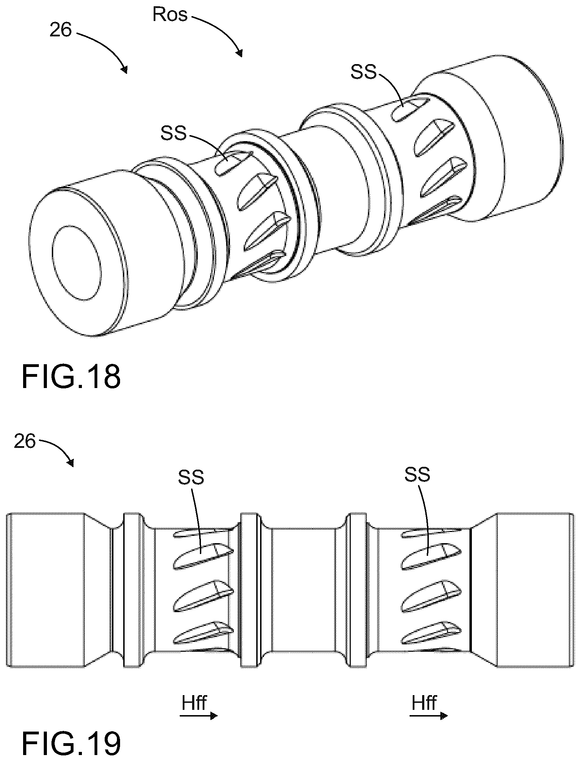

Figure 4 discloses in a simplified view another type of an impact device 8 and a valve system for controlling reciprocating operation of a percussion piston 19. The valve system comprises a spool valve 29 provided with an elongated shaft-like control valve 26 which is arranged axially movably inside a valve housing 30. The control valve 26 comprises several control surfaces 31a - 31d at axial distances from each other for controlling hydraulic fluid flows in response to the axial control movement M. Thus, the control valve 26 can open and close connections between a tank 32, hydraulic pump 33, a first working pressure space 34 of the impact device 8, and a second working pressure space 35 of the impact device 8 to thereby control the movement of the percussion piston 19 in impact direction A and return direction B. Hydraulic pressure effects on working pressure surfaces 36 and 37 and cause the axial movement. Further, one or more radial outer surfaces of the control valve 26 comprises one or several slanted surfaces longitudinal direction of which have oblique orientation in relation to the central axis of the control valve 26. Possible configurations of the slanted surfaces on the control valve 26 are disclosed in Figures 18 - 21.

In Figure 4 the control valve 26 is alternating pressure prevailing in working pressures spaces 34 and 35, but in an alternative solution the pressure may be changed only in one working pressure space when working pressure areas are dimensioned accordingly.

Figure 5 and 6 disclose a control valve 26 which is a control sleeve 38 comprising central axis Ca and a central axial opening 39 configured to serve as a fluid passage. The control sleeve 38 has radial outer surfaces Ros and radial inner surfaces Ris. The control valve 26 has a control shoulder 40 on the radial outer surface Ros. The control shoulder 40 is provided with several slanted surfaces SS. The slanted surfaces SS have groove-like configuration. When hydraulic fluid flow is directed to these slated surfaces SS, torque T is generated and the control sleeve 38 can turn. Direction of the hydraulic fluid flow Hff is indicated by an arrow. Figure 6 shows that the slanted surfaces 40 have continuously changing radial dimensions. This can be noted since the slanted surfaces have wider left side edge 41 which narrows towards a right side edge 42.

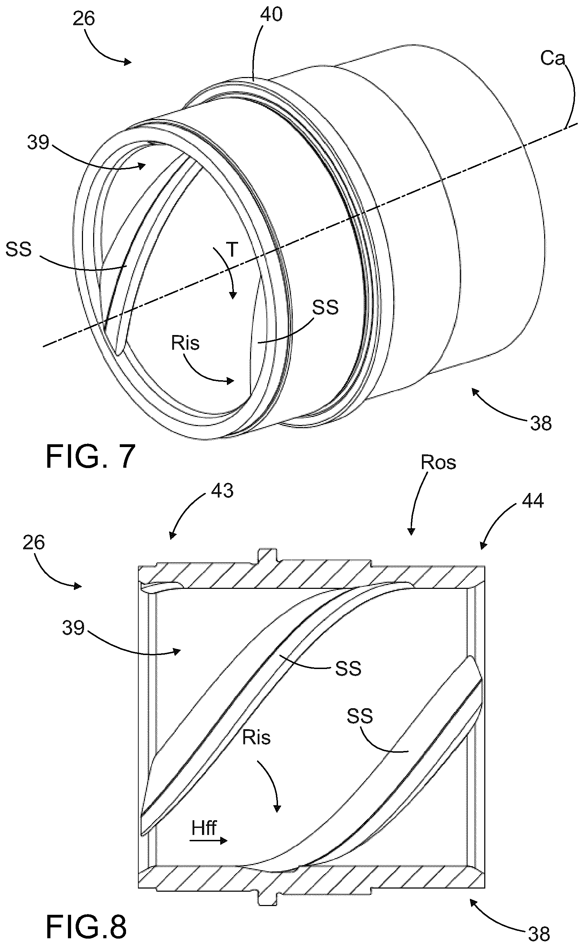

Figures 7 and 8 disclose a control valve 26 which is a control sleeve 38 and comprises slanted surfaces SS on its radial inner surfaces Ris. The slanted surfaces SS are grooves and have helical configuration in longitudinal direction of the slanted surface SS. When hydraulic fluid flow Hff is directed to these slated surfaces SS, torque T is generated and the control sleeve 38 can turn.

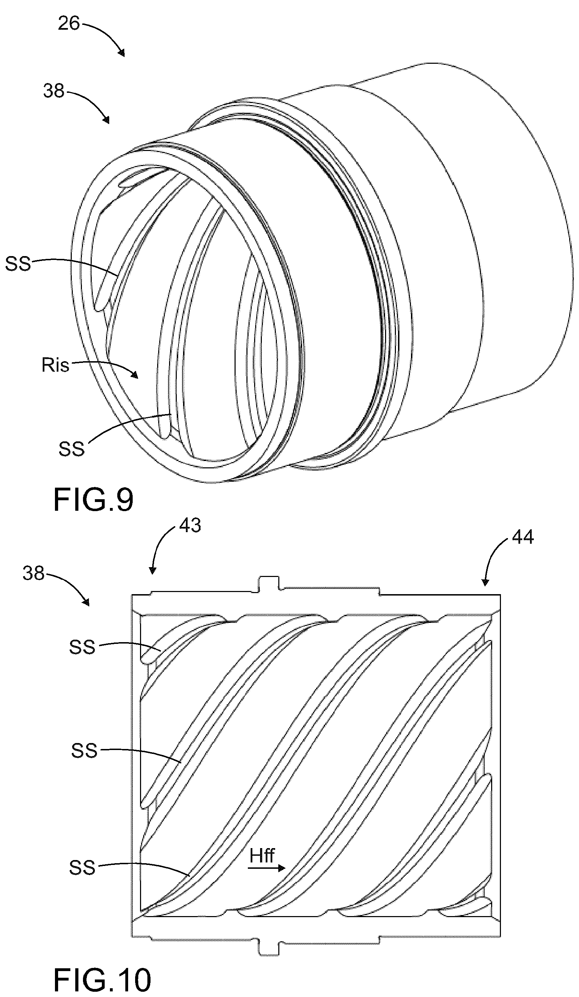

Figures 9 and 10 disclose a control sleeve 38 which differs from the one shown in Figures 7 and 8 in that number of the slanted surfaces SS, i.e., the number of the helical grooves on the radial inner surfaces is greater.

Further, the control sleeves 38 have first end surfaces 43 and opposite second end surfaces 44, and the helical grooves extend from end the end in Figures 7 - 10. Then surface areas of the slanted surfaces SS are great and effective torque T can be generated. The grooves forming the slanted surfaces SS may have constant depth, as it is shown in Figures 7 - 11.

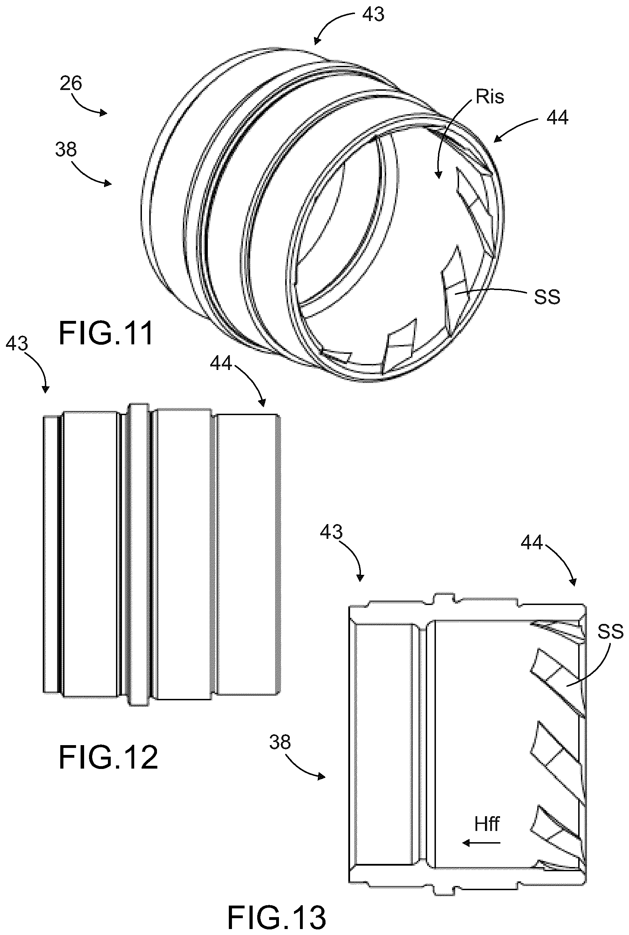

Figures 11 - 13 disclose a control sleeve 38 which is provided with several slanted surfaces SS on its radial inner surfaces Ris at second end surfaces 44.

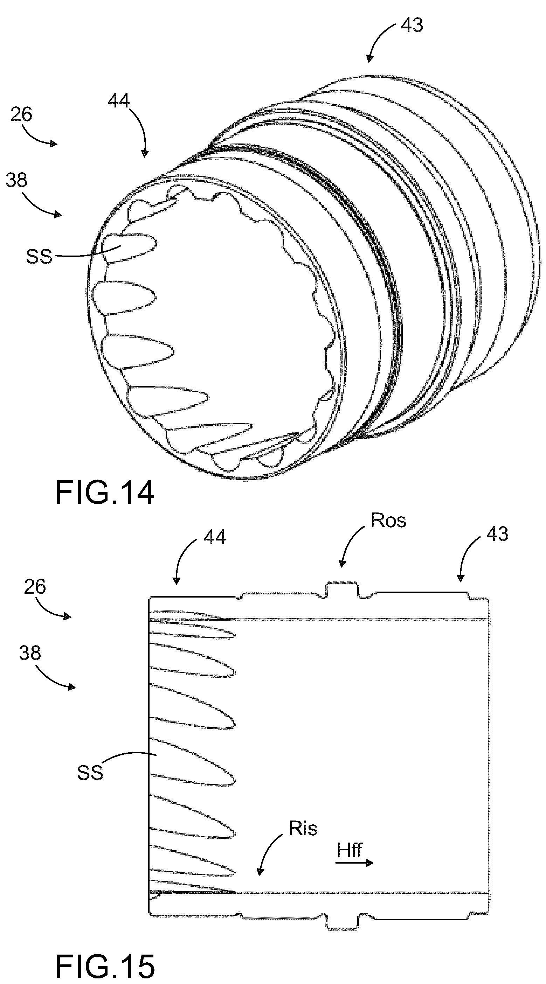

Figures 14 and 15 disclose a control sleeve 38 which is provided with several slanted surfaces SS on its radial inner surfaces Ris at first end surfaces 44. As can be seen, shape of groove-like slanted surfaces SS vary continuously in their length direction. In other words, width and depth of the grooves diminish towards the second end 43.

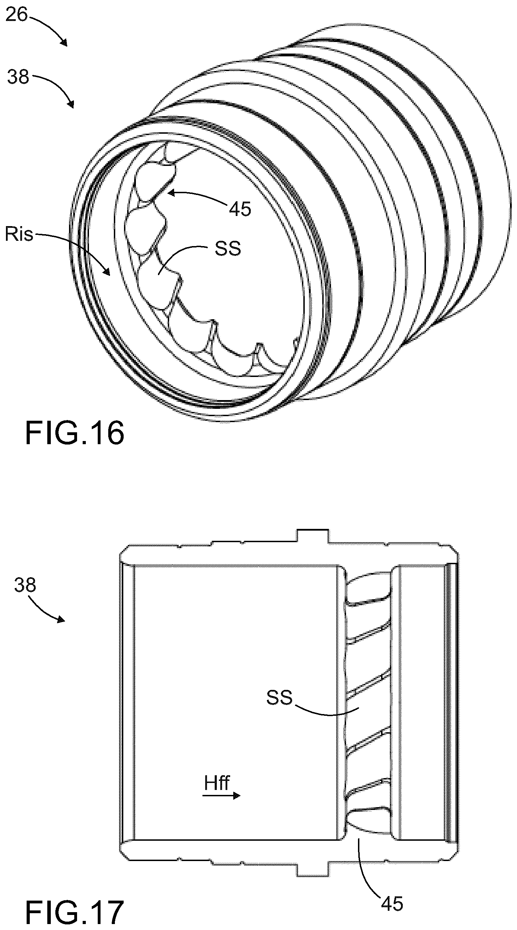

Figures 16 and 17 disclose a control sleeve 38 which is provided with several slanted surfaces SS on an inner control shoulder 45.

Further, different combinations of the solutions disclosed in Figures 4 - 17 can also be implemented. Thus, it may be possible to arrange the slanted surfaces on both the radial inner and outer surfaces. There may also be a combination of protruding and groove like slanted surfaces.

Figures 18 and 19 disclose a shaft-like control valve 26 of a spool valve. On a radial outer surface Ros of the control valve 26 there are two sections provided with slanted surfaces SS. The slanted surfaces SS may be grooves cross-section of which change along their length. The slanted surfaces SS are arranged at sections where occurs hydraulic fluid flow Hff which makes the control valve 26 turn by the help of the slanted surfaces SS.

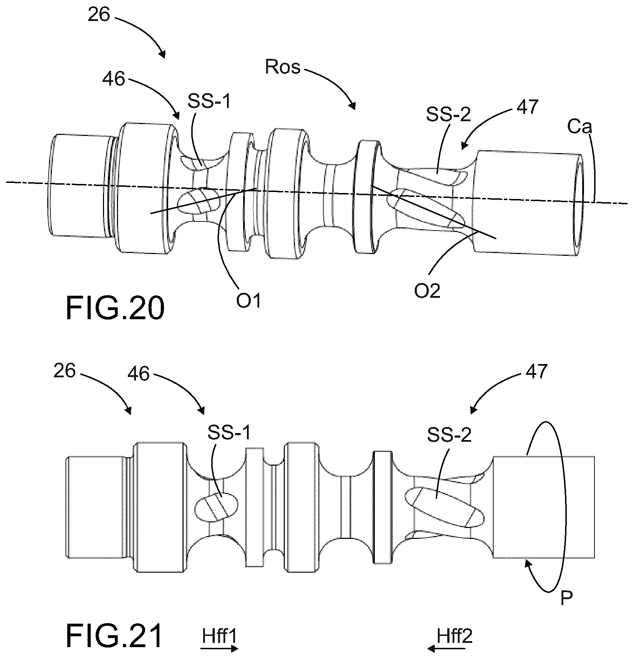

Figures 20 and 21 also disclose a shaft-like control valve 26 of a spool valve. The control valve 26 differs from the one shown in Figures 18 and 19 in that there are a first set 46 of several first slanted surfaces SS-1 and a second set 47 of several second slanted surfaces SS-2 at an axial distance from the first set SS-1. The first and second slanted surfaces SS-1, SS-2 have oppositely directed oblique orientations O1, O2 relative to each other. In other words, the control valve 26 can control fluid flows having opposite flow directions Hff1, Hff2 relative to each other. Then the first set 46 is influenced by first fluid flow Hff1 having first direction of flow, and the second set 47 is influenced by second fluid flow Hff2 having second direction. The first and second sets 46, 47 are configured to turn P the control valve 26 to the same rotation direction when being influenced by the first and second fluid flows Hff1, Hff2.

Figures 20 and 21 also show, that the control valve 26 may comprise slanted surfaces SS-1 and SS-2 which have different shapes and dimensions.

The drawings and the related description are only intended to illustrate the idea of the invention. In its details, the invention may vary within the scope of the claims.

## Claims

1. A control valve (26) for a hydraulic impact device (8) of a rock breaking apparatus (Rba),
wherein the control valve (26) is an elongated piece with a central axis and radial outer and inner surfaces (Ros, Ris),
and comprises several control surfaces at axial distances from each other for controlling hydraulic fluid flows (Hff) in response to axial control movement (M),
the control valve (26) is a control sleeve comprising a central axial opening (39) configured to serve as a fluid passage,
**characterized in that**
the control valve (26) is configured to be rotated hydraulically during the operation of the impact device (8);
the control valve (26) is without any transverse openings passing the control valve (26) in transverse direction; and
at least one radial surface (Ros, Ris) of the control valve (26) comprises at least one slanted surface (SS) for generating torque (T) for providing the hydraulic rotation, longitudinal direction of which has oblique orientation in relation to the central axis of the control valve (26).

2. The control valve as claimed in claim 1, **characterized in that**
the radial outer surface (Ros) is provided with several slanted surfaces (SS).

3. The control valve as claimed in claim 1 or 2, **characterized in that**
the radial inner surface (Ris) is provided with several slanted surfaces (SS).

4. The control valve as claimed in any one of the preceding claims 1 - 3, **characterized in that**
the slanted surface (SS) is linearly directed on the radial surface (Ros, Ris) of the control valve (26).

5. The control valve as claimed in any one of the preceding claims 1 - 3, **characterized in that**
the slanted surface (SS) has helical configuration in longitudinal direction of the slanted surface.

6. The control valve as claimed in any one of the preceding claims 1 - 5, **characterized in that**
the slanted surface (SS) has uniform radial dimensions at least in one longitudinal part of the slanted surface.

7. The control valve as claimed in any one of the preceding claims 1 - 5, **characterized in that**
the slanted surface (SS) has continuously changing radial dimensions at least in one longitudinal part of the slanted surface.

8. The control valve as claimed in any one of the preceding claims 1 - 7, **characterized in that**
the control valve (26) has a first end surface (43) and an opposite second end surface (44); and
several slanted surfaces (SS) extend to at one of the mentioned first end surface (43) and second end surface (44).

9. The control valve as claimed in any one of the preceding claims 1 - 8, **characterized in that**
the control valve (26) has at least one control shoulder (40, 45) on at least one of the mentioned inner radial surface (Ris) and outer radial surface (Ros); and
the mentioned at least one control shoulder (40, 45) is provided with several slanted surfaces (SS).

10. The control valve as claimed in any one of the preceding claims 1 - 9, **characterized in that**
the slanted surface (SS) has groove-like configuration.

11. The control valve as claimed in any one of the preceding claims 1 - 9, **characterized in that**
the slanted surface (SS) has protrusion-like configuration.

12. The control valve as claimed in any one of the preceding claims 1 - 11, **characterized in that**
the control valve (26) has a first set (46) of several first slanted surfaces (SS-1) and a second set (47) of several second slanted surfaces (SS-2) at an axial distance from the first set (46); and
the first and second slanted surfaces (SS-1, SS-2) have oppositely directed oblique orientations (O1, O2) relative to each other.

13. An impact device (8) of a rock breaking apparatus (Rba) comprising:
a body (10);
a percussion piston (19) being movable in an impact direction (A) towards a front end (Fe) of the impact device (8) and in a reverse direction (B) towards a rear end (Re) of the impact device (8);
a working pressure space provided with hydraulic pressure fluid for moving the percussion piston (19) in the reverse direction (B);
a control pressure space at a rear end of the valve cylinder and being provided with a control valve (26) for controlling hydraulic pressure affecting at the control pressure space and to thereby controlling reciprocating movement of the percussion piston (19);
**characterized in that**
the control valve (26) is in accordance with any one of the previous claims 1 - 12.

## Patentansprüche

1. Steuerventil (26) für eine hydraulische Schlagvorrichtung (8) einer Gesteinsbrecheinrichtung (Rba),
wobei das Steuerventil (26) ein längliches Teil mit einer Mittelachse und radialen Außen- und Innenflächen (Ros, Ris) ist
und mehrere Steuerflächen in axialen Abständen voneinander zum Steuern von Hydraulikfluidströmen (Hff) als Reaktion auf axiale Steuerbewegungen (M) umfasst, wobei das Steuerventil (26) eine Steuerhülse ist, die eine zentrale axiale Öffnung (39) umfasst, die so konfiguriert ist, dass sie als Fluiddurchgang dient,
**dadurch gekennzeichnet, dass**
das Steuerventil (26) so konfiguriert ist, dass es während des Betriebs der Schlagvorrichtung (8) hydraulisch gedreht wird;
das Steuerventil (26) ohne quer verlaufenden Öffnungen ist, die das Steuerventil (26) in Querrichtung passieren; und
mindestens eine radiale Fläche (Ros, Ris) des Steuerventils (26) mindestens eine abgeschrägte Fläche (SS) zum Erzeugen von Drehmoment (T) umfasst, um die hydraulische Drehung bereitzustellen, deren Längsrichtung eine Ausrichtung schräg zur Mittelachse des Steuerventils (26) aufweist.

2. Steuerventil nach Anspruch 1, **dadurch gekennzeichnet, dass**
die radiale Außenfläche (Ros) mit mehreren abgeschrägten Flächen (SS) bereitgestellt ist.

3. Steuerventil nach Anspruch 1 oder 2, **dadurch gekennzeichnet, dass**
die radiale Innenfläche (Ris) mit mehreren abgeschrägten Flächen (SS) bereitgestellt ist.

4. Steuerventil nach einem der vorstehenden Ansprüche 1 - 3, **dadurch gekennzeichnet, dass**
die abgeschrägte Fläche (SS) linear auf die radiale Fläche (Ros, Ris) des Steuerventils (26) gelenkt ist.

5. Steuerventil nach einem der vorstehenden Ansprüche 1 - 3, **dadurch gekennzeichnet, dass**
die abgeschrägte Fläche (SS) in Längsrichtung der abgeschrägten Fläche eine spiralförmige Konfiguration aufweist.

6. Steuerventil nach einem der vorstehenden Ansprüche 1 - 5, **dadurch gekennzeichnet, dass**
die abgeschrägte Fläche (SS) mindestens in einem Längsteil der abgeschrägten Fläche einheitliche radiale Abmessungen aufweist.

7. Steuerventil nach einem der vorstehenden Ansprüche 1 - 5, **dadurch gekennzeichnet, dass**
die abgeschrägte Fläche (SS) mindestens in einem Längsteil der abgeschrägten Fläche sich kontinuierlich verändernde radiale Abmessungen aufweist.

8. System nach einem der vorstehenden Ansprüche 1 - 7, **dadurch gekennzeichnet, dass**
das Steuerventil (26) eine erste Endfläche (43) und eine gegenüberliegende zweite Endfläche (44) aufweist; und
sich mehrere abgeschrägte Flächen (SS) zu einer der ersten Endflächen (43) und zweiten Endflächen (44) erstrecken.

9. System nach einem der vorstehenden Ansprüche 1 - 8, **dadurch gekennzeichnet, dass**
das Steuerventil (26) mindestens eine Steuerschulter (40, 45) auf mindestens einer der radialen Innenfläche (Ris) und radialen Außenfläche (Ros) aufweist; und
die mindestens eine Steuerschulter (40, 45) mit mehreren abgeschrägten Flächen (SS) bereitgestellt ist.

10. Steuerventil nach einem der vorstehenden Ansprüche 1 - 9, **dadurch gekennzeichnet, dass**
die abgeschrägte Fläche (SS) eine rillenartige Konfiguration aufweist.

11. Steuerventil nach einem der vorstehenden Ansprüche 1 - 9, **dadurch gekennzeichnet, dass**
die abgeschrägte Fläche (SS) eine vorsprungsartige Form aufweist.

12. Steuerventil nach einem der vorstehenden Ansprüche 1 - 11, **dadurch gekennzeichnet, dass**
das Steuerventil (26) einen ersten Satz (46) mehrerer erster abgeschrägter Flächen (SS-1) und einen zweiten Satz (47) mehrerer zweiter abgeschrägter Flächen (SS-2) in einem axialen Abstand von dem ersten Satz (46) aufweist; und
die erste und zweite abgeschrägte Fläche (SS-1, Ss-2) in Bezug aufeinander entgegengesetzt gelenkte abgeschrägte Ausrichtungen (01, 02) aufweisen.

13. Schlagvorrichtung (8) einer Gesteinsbrecheinrichtung (Rba), umfassend:
einen Körper (10);
einen Schlagkolben (19), der in Schlagrichtung (A) zu einem vorderen Ende (Fe) der Schlagvorrichtung (8) und in einer umgekehrten Richtung (B) zu einem hinteren Ende (Re) der Schlagvorrichtung (8) beweglich ist;
einen mit Hydraulikdruckfluid gefüllten Arbeitsdruckraum zum Bewegen des Schlagkolbens (19) in der umgekehrten Richtung (B);
einen Steuerdruckraum an einem hinteren Ende des Ventilzylinders, der mit einem Steuerventil (26) zum Steuern von Hydraulikdruck, der am Steuerdruckraum wirkt, und damit zum Steuern von Hin- und Herbewegung des Schlagkolbens (19) bereitgestellt ist;
**dadurch gekennzeichnet, dass**
das Steuerventil (26) gemäß einem der vorstehenden Ansprüche 1-12 ist.

## Revendications

1. Vanne de commande (26) pour un dispositif d'impact hydraulique (8) d'un appareil de rupture de roche (Rba),
dans laquelle la vanne de commande (26) est une pièce allongée avec un axe central et des surfaces externe et interne radiales (Ros, Ris),
et comprend plusieurs surfaces de commande à des distances axiales les unes des autres pour réguler des flux de fluide hydraulique (Hff) en réponse à un mouvement de commande axial (M), la vanne de commande (26) est un manchon de commande comprenant une ouverture axiale centrale (39) configurée pour servir de passage de fluide,
**caractérisée en ce que**
la vanne de commande (26) est configurée pour être mise en rotation de manière hydraulique pendant le fonctionnement du dispositif d'impact (8) ;
la vanne de commande (26) ne comporte aucune ouverture transversale traversant la vanne de commande (26) dans la direction transversale ; et
au moins une surface radiale (Ros, Ris) de la vanne de commande (26) comprend au moins une surface inclinée (SS) pour générer un couple (T) pour assurer la rotation hydraulique, dont la direction longitudinale présente une orientation oblique par rapport à l'axe central de la vanne de commande (26).

2. Vanne de commande selon la revendication 1, **caractérisée en ce que**
la surface externe radiale (Ros) est pourvue de plusieurs surfaces inclinées (SS).

3. Vanne de commande selon la revendication 1 ou 2, **caractérisée en ce que**
la surface interne radiale (Ris) est pourvue de plusieurs surfaces inclinées (SS).

4. Vanne de commande selon l'une quelconque des revendications précédentes 1-3, **caractérisée en ce que**
la surface inclinée (SS) est dirigée linéairement sur la surface radiale (Ros, Ris) de la vanne de commande (26).

5. Vanne de commande selon l'une quelconque des revendications précédentes 1-3, **caractérisée en ce que**
la surface inclinée (SS) présente une configuration hélicoïdale dans la direction longitudinale de la surface inclinée.

6. Vanne de commande selon l'une quelconque des revendications précédentes 1-5, **caractérisée en ce que**
la surface inclinée (SS) présente des dimensions radiales uniformes au moins dans une partie longitudinale de la surface inclinée.

7. Vanne de commande selon l'une quelconque des revendications précédentes 1-5, **caractérisée en ce que**
la surface inclinée (SS) présente des dimensions radiales changeant continuellement au moins dans une partie longitudinale de la surface inclinée.

8. Vanne de commande selon l'une quelconque des revendications précédentes 1-7, **caractérisée en ce que**
la vanne de commande (26) présente une première surface d'extrémité (43) et une seconde surface d'extrémité opposée (44) ; et
plusieurs surfaces inclinées (SS) s'étendent jusqu'à l'une de la première d'extrémité (43) et de la seconde surface d'extrémité (44) mentionnées.

9. Vanne de commande selon l'une quelconque des revendications précédentes 1-8, **caractérisée en ce que**
la vanne de commande (26) présente au moins un épaulement de commande (40, 45) sur au moins une de la surface radiale interne (Ris) et de la surface radiale externe (Ros) mentionnées ; et
le au moins un épaulement de commande mentionné (40, 45) est pourvu de plusieurs surfaces inclinées (SS).

10. Vanne de commande selon l'une quelconque des revendications précédentes 1-9, **caractérisée en ce que**
la surface inclinée (SS) présente une configuration en forme de rainure.

11. Vanne de commande selon l'une quelconque des revendications précédentes 1-9, **caractérisée en ce que**
la surface inclinée (SS) présente une configuration en forme de protubérance.

12. Vanne de commande selon l'une quelconque des revendications précédentes 1-11, **caractérisée en ce que**
la vanne de commande (26) présente un premier ensemble (46) de plusieurs premières surfaces inclinées (SS-1) et un second ensemble (47) de plusieurs secondes surfaces inclinées (SS-2) à une distance axiale du premier ensemble (46) ; et
les premières et secondes surfaces inclinées (SS-1, SS-2) présentent des orientations obliques dirigées dans des directions opposées (01, 02) les unes par rapport aux autres.

13. Dispositif d'impact (8) d'un appareil de rupture de roche (Rba) comprenant :
un corps (10) ;
un piston de percussion (19) qui est mobile dans une direction d'impact (A) vers une extrémité avant (Fe) du dispositif d'impact (8) et dans une direction inverse (B) vers une extrémité arrière (Re) du dispositif d'impact (8) ;
un espace de pression de travail pourvu d'un fluide de pression hydraulique pour déplacer le piston de percussion (19) dans la direction inverse (B) ;
un espace de pression de commande à l'extrémité arrière du cylindre de vanne et étant pourvu d'une vanne de commande (26) pour réguler la pression hydraulique agissant sur l'espace de pression de commande et pour ainsi commander le mouvement alternatif du piston de percussion (19) ;
**caractérisé en ce que**
la vanne de commande (26) est conforme à l'une quelconque des revendications précédentes 1-12.
